# EUROPÄISCHE PATENTSCHRIFT

(11) **EP 0 526 691 B1**
(45) Veröffentlichungstag und Bekanntmachung des Hinweises auf die Patenterteilung: **28.12.1994**
(21) Anmeldenummer: 92105250.2
(22) Anmeldetag: 27.03.1992
(51) Int. Cl.: G01N 33/48, G01N 35/00, B01J 19/00, B01L 11/00

(54) **Gerät zur Durchführung von chemischen Prozessen an einer Probe eines chemischen Materials**
Apparatus for carrying out chemical processes on a sample of chemical material
Appareil pour l'exécution des processus chimiques avec une échantillon de matériaux chimiques

(30) Priorität: 07.08.1991 DE 9109797 U
(43) Veröffentlichungstag der Anmeldung: 10.02.1993
(73) Patentinhaber: WISSENSCHAFTLICHE GERÄTEBAU Dr.Ing.Herbert Knauer GMBH, D-13597 Berlin (DE)
(72) Erfinder: Reimann, Frank, Dr., W-1000 Berlin 20 (DE); Fischer, Stefan, Dr., W-1000 Berlin 20 (DE)
(74) Vertreter: Richter, Werdermann & Gerbaulet

(56) Entgegenhaltungen:
- EP-A- 0 164 206
- EP-A- 0 434 149
- WO-A-91/07486
- DE-A- 3 137 875
- GB-A- 2 084 899
- US-A- 3 552 865

## Beschreibung

Die Erfindung betrifft ein Gerät zur Durchführung von chemischen Prozessen an einer Probe eines chemischen Materials mit einer zwischen zwei Kammerelementen ausgebildeten Reaktionskammer, mit in diese auf einander gegenüberliegenden Seiten mündenden Ein- und Auslässen, und mit einem in der Reaktionskammer angeorneten Filterelement, wobei die Reaktionskammer des Gerätes in der Trennebene der beiden Kammerelemente als flache Ausnehmung ausgebildet ist, deren Tiefe geringfügig größer als die Dicke des in die Reaktionskammer eingelegten und diese teilweise ausfüllenden Filterelementes ist, und daß die kanalartigen Ein- und Auslässe in den Boden der Reaktionskammer derart münden, daß diese durchströmt wird.

Ein solches Gerät zur Durchführung von chemischen Prozessen dient insbesondere zum stufenweisen Abbau von Peptid- und Proteinketten zur Ermittlung der Sequenz der Aminosäureeinheiten und ist durch die im Oberbegriff berücksichtigte GB-A-2 084 899 und DE-A-31 37 875 bekannt.

Hier bestehen die Kammerelemente aus Glas und weisen in ihrer Trennebene symmetrische, insbesondere kreisrunde Ver tiefungen auf, deren Tiefe zur Mitte hin zunimmt.In der Trennebene der Kammerelemente ist ein poröses Filterelement, insbesondere aus PTFE, eingespannt,auf dessen Oberfläche ist ein Glasfaserfilter aufgelegt.Die Ein- und Auslässe münden im Zentrum der im wesentlichen kreisrunden Reaktionskammer auf einander gegenüberliegenden, durch das Glasfaserfilter und das Filterelement getrennten Seiten.An die Ein- und Auslässe sind Anschlußleitungen zur Zufuhr und Abfuhr des Probenmaterials angeschlossen. Auf das Glasfaserfilter wird das Probenmaterial aus dem zu analysierenden Material aufgegeben, wobei das Probenmaterial von oben auf das Glasfaserfilter aufgetragen wird.Anschließend werden Lösungsmittel und Reagenzien für die chemische Reaktion zugeführt. Das Probenmaterial,insbesondere Protein, bleibt aufgrund seiner Größe und chemischer und physikalischer Eigenschaften haften. Es wird nun von der Kette der Aminosäure eine einzelne Aminosäure abgespalten, wobei diese Aminosäure dann leicht ausgewaschen werden kann. Nachteilig hierbei ist, daß die an sich träge Aminosäurekette dann, wenn diese an die Oberfläche des Glasfaserfilters diffundiert ist, leicht für die weitere Analyse verlorengehen kann. Zur Vermeidung dieses Nachteils wird ein zusätzlicher Stoff, z.B. Polybren (Hexadimethrinbromid), in Matrixform aufgebracht, um das Auswaschen der Proteinkette des Gesamtproteins zu verringern. Dieser zusätzliche Stoff ergibt jedoch unerwünschte Nebenprodukte, die mit großem Zeit- und Arbeitsaufwand durch Reinigungsvorgänge des Glasfaserfilters (Waschen und Konditionieren) herausgetrennt werden müssen. Dabei müssen,bedingt durch die Größe der Reaktionskammer (Volumen 150 µl) und die ungünstigen Strömungsverhältnisse, große Lösungsmittelmengen verwendet werden. Da die verwendeten Lösungen nicht absolut wasserfrei hergestellt werden können, wird mit größeren Lösungsmittelmengen mehr Probenmaterial ausgewaschen und geht für die Analyse verloren. Ein weiterer Nachteil ist das Durchströmen des Filters mit Lösungsmitteln, da diese die an sich träge Peptid- oder Proteinkette geringfügig transportieren können. Schon geringe Transportwege führen aber zum Verlassen des Filters und zum Auswaschen.

Des weiteren kommt hinzu, daß bei den bekannten Geräten die Empfindlichkeit geringer ist, da durch die größere Reaktionskammer auch ein größerer Auswasch der zu untersuchenden Probe auftritt, der die Menge der Probe nach jedem Reaktionsschritt herabsetzt.

Der Erfindung liegt die Aufgabe zugrunde, ein Gerät der eingangs genannten Art zu schaffen, bei dem der chemische Prozeß an einer Probe eines chemischen Materials, insbesondere der stufenweise Abbau von Peptid- und Proteinketten zur Ermittlung der Sequenz der Aminosäureinheiten, durch eine präzise Dosierung aller Chemikalien mit einer größeren Ausbeute erreicht wird, die Menge der kritischen Chemikalien, die einen Auswasch der Probe erzeugen, reproduzierbar begrenzt wird und die Präzision der Dosierung von der räumlichen Entfernung der Reaktionskammer zum Schaltventil weitgehend unabhängig ist. Außerdem sollen durch die Verkleinerung der Reaktionskammer weniger Chemikalien verbraucht werden und durch den geringeren Auswasch der Probe eine größere Empfindlichkeit erreicht werden. Des weiteren soll der Aufbau eines Gerätes mit mehreren Reaktionskammern möglich sein, damit in den Nachtstunden und am Wochenende automatisch die nächste Probe bearbeitet werden kann.

Diese Aufgabe wird durch die im Anspruch 1 gekennzeichneten Merkmale gelöst.

Aufgrund einer derart erfindungsgemäßen Ausgestaltung wird ein Gerät zur Durchführung von chemischen Prozessen geschaffen, bei dem die Reaktionskammer in der Trennebene der beiden Kammerelemente als flache Ausnehmung bzw. Vertiefung ausgebildet ist, deren Tiefe in geringem Maße größer als die Dicke des in die Reaktionskammer eingelegten Filterelementes ist, wobei die Ein- und Auslässe in den Boden der Reaktionskammer derart münden, daß diese durchströmt und das Filterelement umflossen wird. Dadurch kann die Reaktionskammer wesentlich verkleinert werden, wobei ein Volumen von etwa 15 µl erreicht wird. Außerdem brauchen die Reagenzien und Lösungsmittel nicht durch das Filterelement zu fließen; der Transport der Peptid- oder Proteinkette ist damit verringert und das Auswaschen weitgehend vermieden. Durch die Verwendung eines Trägermaterials aus PVDF (Polyvinylidenfluorid) kann eine weitere Verkleinerung der Höhe der Reaktionskammer durchgeführt werden, da die Dicke des Materials geringer ist als bei üblichen Glasfaserfiltern.

Mit der erreichten Verkleinerung der Reaktionskammer zur Steigerung der Empfindlichkeit können auch kleinere Mengen an Chemikalien (1 bis 4 µl) dosiert werden. Die Dosierung dieser kleinen Mengen durch volumetrische Schleifen ist zwar möglich, doch stellt sich dann das Problem des Transports dieser kleinen Menge von der Schleife zur Reaktionskammer. Dieser Transport wird bekannterweise mit einem inerten Gasstrom durchgeführt. Dabei verändert sich die flüssige Menge bei leichten flüchtigen Substanzen durch Verdampfen. Diese Verdampfung ist je nach Länge des Transportweges unterschiedlichen Schwankungen unterworfen. Eine zu große Dosierung führt bei bestimmten Reagenzien zum sofortigen Verlust des Probenmaterials durch Auswaschen. Eine zu kleine Dosierung verschlechtert die Ausbeuten der Reaktion.

Damit waren mit der bisherigen Technik der zeitabhängigen Dosierung umfangreiche Tests und Variationen der Schleifen zur präzisen Dosierung der kritischen Reagenzien notwendig. Die Inbetriebnahme der Geräte wird durch diese Tests zeitlich sehr anspruchsvoll. Außerdem verändern sich die Membrandosierventile durch Alterung geringfügig. Diese Änderungen haben aber große Auswirkungen auf die Reproduzierbarkeit der Dosierung, so daß erfahrungsgemäß im Abstand von vier Monaten eine Neujustage der Dosierungen notwendig wird.

Die erfindungsgemäße Reaktionskammer integriert diese volumetrische Schleife in Form einer Vorkammer in die Reaktionskammer. Der Transportweg der Flüssigkeit beträgt auf diese Weise nur wenige Millimeter.

Durch die direkte Kopplung der volumetrischen Dosierung mit der Reaktionskammer wirken sich Ventilveränderungen nicht mehr aus. Die Inbetriebnahme und Justierung der Geräte ist stark verkürzt.

Weitere vorteilhafte Ausgestaltungen der Erfindung sind in den Unteransprüchen gekennzeichnet.

So kann das Filterelement sowie die Vorkammer eine beliebige Form aufweisen. Speziell bei der Technik des elektrophoretischen Blottens ist die natürliche Bandenform, d.h. die Ausbreitungsform des Proteins, breit und kurz. Die Verwendung eines kreisförmigen Filterelementes gemäß dem Stand der Technik wird dadurch immer zu einem Kompromiß. Gemäß der Erfindung ist die Form der Reaktionskammer in den drei Raumdimensionen dadurch gekennzeichnet, daß eine Dimension im wesentlichen der Dicke des Filterelementes entspricht. In den beiden anderen Dimensionen kann die Reaktionskammer die geometrische Form einer Ellipse bilden, wobei eine Halbachse wesentlich größer ist als die andere. Möglich ist auch die geometrische Form des Rechtecks, auch mit abgerundeten Ecken. Auch andere Formen, z.B. Dreieck- und Kreisformen sind möglich. Durch die Kombination der Vorkammer mit der Hauptkammer ergibt sich auch erstmalig in der automatischen Sequenzanalyse die Gelegenheit, ein Gerät mit mehreren Reaktoren aufzubauen. Durch die ventilunabhängige Vordosierung wird eine Begrenzung der Mengen an kritischen Reagenzien erreicht. Die nach dem Stand der Technik vorgegebene Möglichkeit läßt einen Betrieb von mehreren Reaktoren nur in der Gasphasentechnik zu. Hierbei wird das kritische Reagenz als Gas unter Zuhilfenahme eines inerten Trägergases in die Reaktionskammer geführt. Dabei sind jedoch im Falle der Trifluoressigsäure als einer der kritischen Reagenzien die Schrittausbeuten geringer als in der flüssigen Phase.

Ausführungsbeispiele der Erfindung werden nachstehend anhand der Zeichnung erläutert. Es zeigen
Fig. 1 in einer Explosionsdarstellung das Gerät zur Durchführung von chemischen Prozessen mit einer einen Einlaß und einen Auslaß aufweisenden Reaktionskammer, wobei der Einlaß mit drei Leitungen versehen ist,
Fig. 2 eine vergrößerte schaubildliche Ansicht des die Reaktionskammer aufnehmenden Kammerelementes des Gerätes gemäß Fig. 1,
Fig. 3 in einer Explosionsdarstellung eine weitere Ausführungsform des Gerätes zur Durchführung von chemischen Prozessen mit einer einen Einlaß und einen Auslaß aufweisenden Reaktionskammer, wobei der Einlaß mit zwei Leitungen versehen ist,
Fig. 4 eine vergrößerte schaubildliche Ansicht des die Reaktionskammer aufnehmenden Kammerelementes des Gerätes gemäß Fig.3,
Fig. 5 einen senkrechten Querschnitt durch das Gerät gemäß Fig. 1 und

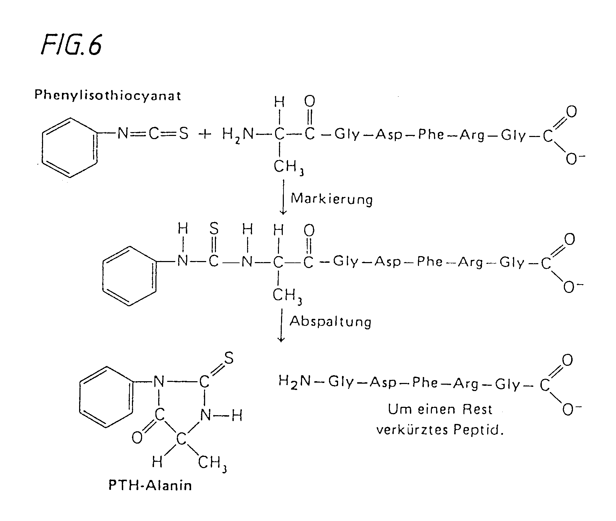

Fig. 6 den chemischen Abbau einer Proteinkette nach Edman.

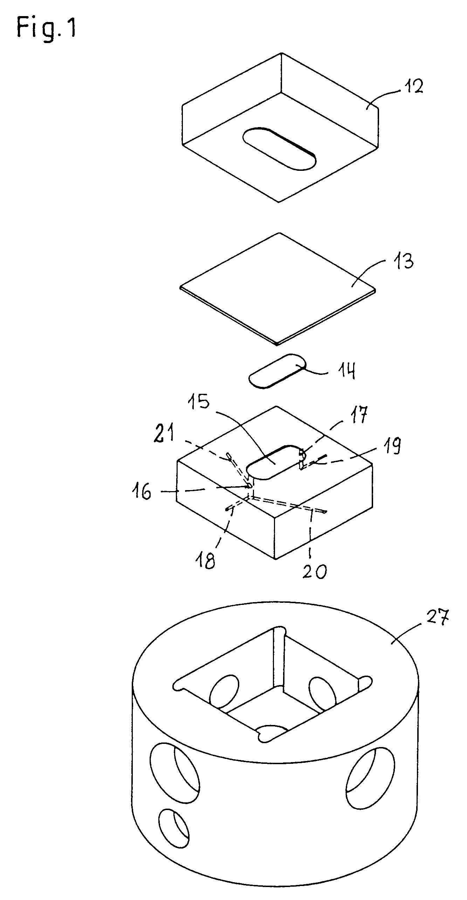

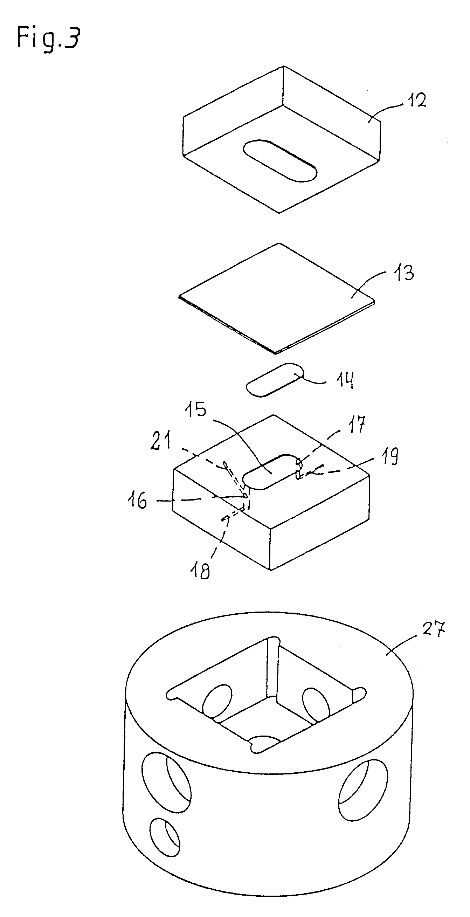

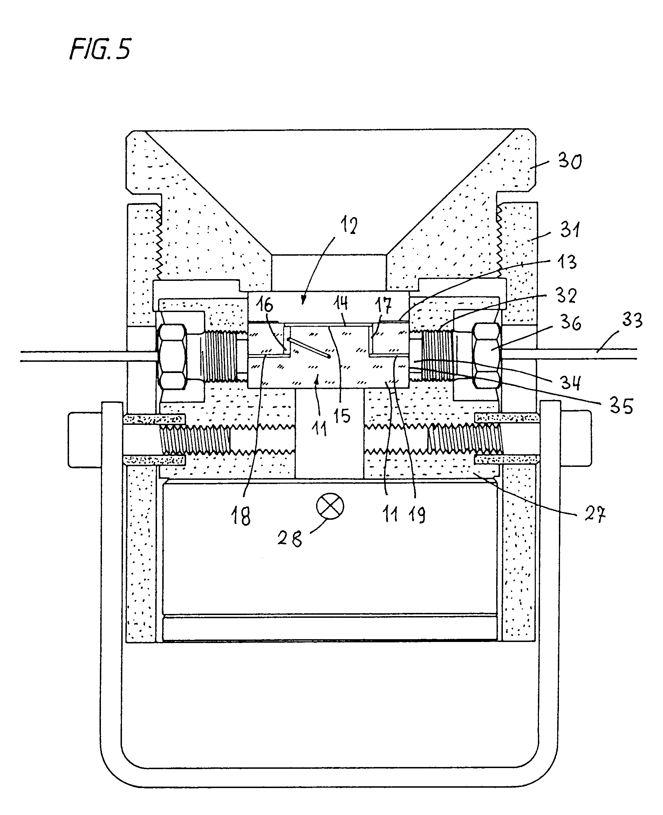

Das mit 10 bezeichnete Gerät zur Durchführung von chemischen Prozessen an einer Probe eines chemischen Materials dient insbesondere zum stufenweisen Abbau von Peptid- und Proteinketten zur Ermittlung der Sequenz der Aminosäureeinheiten. Das Gerät 10 umfaßt zwei Kammerelemente 11,12 aus einem chemisch inerten Material, bevorzugterweise Glas. Zwischen den Kammerelementen 11,12 ist als Dichtmembran eine Folie 13 aus Polytetrafluorethylen (PTFE) eingelegt (Fig. 1 und 3). Die Kammerelemente 11,12 werden durch eine Überwurfverschraubung 30,31 mit einem Metallblock als Halterung 27 verbunden, in den eine Beleuchtung 28 und eine in der Zeichnung nicht dargestellte Heizeinrichtung integriert sind (Fig.5).

In die Oberfläche des unteren Kammerelementes 11 ist eine Reaktionskammer 15 eingefräst, die als flache Ausnehmung oder Vertiefung ausgebildet ist, wobei deren Tiefe geringfügig größer als die Dicke eines in diese Ausnehmung eingelegten Filterelementes 14 ist. In den Boden der Reaktionskammer 15 münden auf einander gegenüberliegenden Seiten kanalartige Ein- und Auslässe 16,17, die als Bohrungen 16′,17′ in die Tiefe ausgeführt sind. Diese Ein- und Auslässe 16,17 sind mit Leitungen 18,20,21 und 19 versehen. Die Bohrungen 16′,17′ sind Teil L-förmiger Kapillaren, die jeweils durch rechtwinklig zueinander stehende Bohrungen 18′,20′,21′ und 19′ gebildet sind. Beim Einpassen des unteren und des oberen Kammerelementes 11,12 in die zylindrische oder eine andere geometrische Form aufweisende Halterung 27 wird das obere Kammerelement 12 mit dem unteren Kammerelement 11 und der Zwischenlage einer Membran 13 fest verbunden, wodurch die Reaktionskammer 15 bei einem festen Aufdrücken der Membran 13 auf das untere Kammerelement 11 abgedichtet wird.

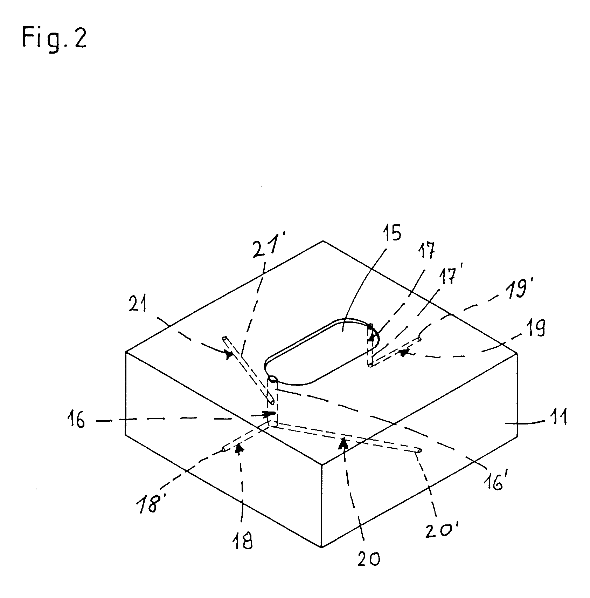

Bei dem in Fig. 1 und 2 gezeigten Ausführungsbeispiel ist der Einlaß 16 mit drei Leitungen 18,20,21 versehen.

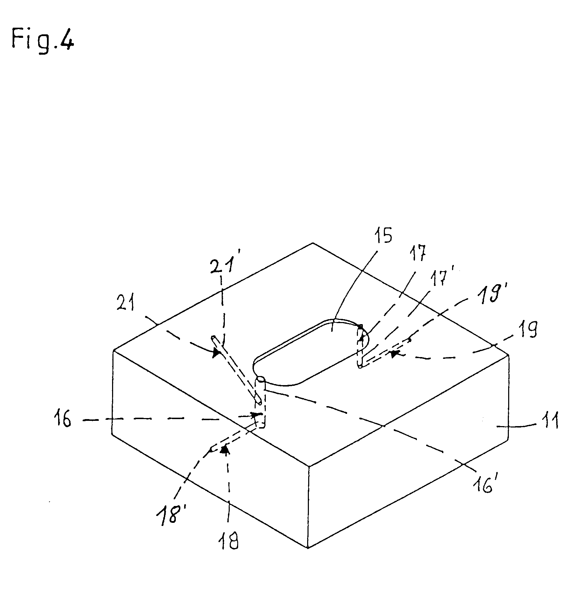

Bei dem Ausführungsbeispiel gemäß Fig. 3 und 4 ist die Leitung 20 entfallen. Der Einlaß 16 ist nur mit den Leitungen 18,21 versehen. Durch die Verwendung von in den Leitungen 18,21 angeordneten Steuerventilen, die vermittels Druckluft über einer Membran geschlossen werden, ist die Möglichkeit gegeben, eine Flüssigkeitsäule durch die Leitungen 18 und 21 zu dosieren. Bei einem schlagartigen Schließen der Ventile wird die Flüssigkeit stark beschleunigt und in die Reaktionskammer hineingedrückt. Aus diesem Grunde kann auf die Leitung 20 verzichtet werden. Die Anwendung eines derart ausgebildeten Gerätes hat sich in der Praxis sehr gut bewährt, denn es führt zu sehr stabilen Dosierungen kleiner Mengen.

Die Reaktionskammer 15 ist durch das flache, poröse Filterelement 14 aus Polyvinylidenfluorid (PVDF) fast vollständig ausgefüllt. Die Form der Reaktionskammer 15 in den drei Raumdimensionen ist derart gekennzeichnet, daß eine Dimension im wesentlichen der Dicke des Filterelementes 14 entspricht. Anstelle eines Filterelementes 14 können auch mehrere Filterelemente übereinandergelegt werden, wenn die Höhe der Reaktionskammer 15 dies zuläßt. In den anderen beiden Dimensionen kann die Reaktionskammer 15 die geometrische Form einer Ellipse haben, deren eine Halbachse wesentlich größer ist als die andere (Fig.1).

Die Reaktionskammer 15 kann aber auch die Form eines Rechtecks, auch mit abgerundeten Ecken, die Form eines Dreiecks, Kreisform oder eine andere geometrische Form besitzen. Wesentlich ist, daß die Reaktionskammer 15 die beiden Ein- und Auslässe 16 und 17 am Boden der Reaktionskammer 15 derart enthält, daß die Fluide die Reaktionskammer der Länge nach durchströmen, d.h. die Ein- und Auslässe 16,17 sind an den Enden der Reaktionskammer 15 der räumlich längstem Ausdehnung angebracht. Im Falle der Kreisform liegen die Ein- und Auslässe 16,17 in den Schnittpunkten einer Geraden durch den Mittelpunkt der Kreisform und dem Außenradius.

Die Reaktionskammer 15 kann auch die Form eines Dreiecks haben, wobei der Einlaß 16 mit einer Seite und der Auslaß 17 mit der gegenüberliegenden Spitze verbunden ist. Durch die Wanderung des Probenmaterials im Filterelement 14 während der Reaktion durch den Strom der Fluide kann im Verlauf der Reaktion eine Konzentrierung in der Spitze des Dreiecks erfolgen. Durch das Umdrehen des Dreiecks und damit Vertauschen von Ein- und Auslaß kann andererseits im Verlauf der Reaktion mehr Trägermaterial für das Probenmaterial zur Verfügung gestellt werden. Bei dieser Ausführungsform ist das dreieckförmig ausgebildete Filterelement 14 dann in der Halterung drehbar gelagert.

Aufgrund der Ausgestaltung des Gerätes 10 beträgt der Transportweg der Flüssigkeit in die Reaktionskammer 15 nur wenige Millimeter. Die Vorkammer wird dabei von einer Leitung 20 (Fluß 20 - 16 - 21) gefüllt; die Leitung 21 dient dabei als Überlauf. Die Leitungen 18,19 werden durch Ventile verschlossen, so daß nur eine vorgegebene Strömungsrichtung möglich ist. Anschließend wird die Flüssigkeit in der Vorkammer durch einen inerten Gasstrom durch die Leitung 18 in die Reaktionskammer 15 transportiert (Fluß 18 - 16 - 15 -17 - 19) . Das Reagenz in den Leitungen 20,21 wird dabei nicht bewegt, da die zugehörigen Ventile geschlossen sind. Wenn die hohe Ausbeute durch flüssige Dosierung bei einer Probe nicht im Vordergrund steht, sondern die grundsätzliche Vermeidung von Nebenprodukten in der flüssigen Phase, so kann das Reagenz durch einen Dampfdruck von der die Vorkammer bildenden Bohrung 16′ auf die Probe einwirken. Der Durchmesser der Bohrung 16′ ist gegenüber den Leitungen größer, die als Kapillare ausgebildet sind. Die Form der Vorkammer kann für diesen speziellen Zweck durch eine flachere Kammer nach Art der Reaktionskammer ausgeformt sein. Dadurch verändert sich die Menge an Gas, die über die vergrößerte Oberfläche, die durch die Vorkammer gebildet wird, austreten und mit der Probe in Wechselwirkung treten kann.

Nach dem Einbau der Kammerelemente 11,12 in die Halterung 27 werden an den Leitungen 18,19,20,21 der Ein- und Auslässe 16,17 Schläuche 33 angeschlossen, die am Ende mit Fittingen 34 aus einem elastischen, chemisch inerten Material versehen sind, das im wesentlichen eine flache Dichtfläche 35 außen um den Schlauch 33 herum aufweist. Die Dichtfläche 35 und das Ende des Schlauches 33 liegen jeweils in einer Ebene. Das flache, dichtende Ende wird mit einem Schraubenteil 36, das in eine der Schraubgewindebohrungen 32 der Halterung 27 eingeschraubt ist, axial gegegen die Öffnungen der Leitungen 18,19,29,21 gedrückt, so daß die Öffnungen der Schläuche 33 mit den Öffnungen der Leitungen 18,19,20,21 kommunizieren. Die Schläuche 33 und die Fittingen 36 bestehen vorzugsweise aus Polytetrafluporethylen (PTFE), können jedoch auch aus einem anderen chemisch inerten Material bestehen. Die Verbindung wird mittels des sogenannten Pull-Through-Fittings hergestellt. Das Fitting erhält eine Bohrung, die kleiner ist als der normale Durchmesser des Schlauches 33. Dann wird der Schlauch 33 gereckt und damit dünner. Dieser gereckte Schlauch 33 wird in die Bohrung des Fittings 34 soweit eingezogen, bis der Schlauch 33 mit dem normalen Durchmesser in dem Fitting 34 sitzt. Das überstehende Ende des Schlauches 33 wird abgeschnitten (Fig.5).

Die im Boden der Halterung 27 angeordnete Beleuchtung 28 dient zur Beleuchtung der Kammerelemente 11,12 und des Filtermaterials 14. Dadurch kann die Füllung der Kammer optimal beobachtet werden.

Das poröse Filterelement 14 besteht aus einer Vielzahl von Fasern, insbesondere Glasfasern oder Fasern aus einem chemisch inerten Material, das gegen die verwendeten Chemikalien beständig ist.

Die Reaktionskammer 15 des hier beschriebenen Gerätes dient zur Durchführung von chemischen Prozessen, insbesondere zum stufenweisen Abbau von Peptid- und Proteinketten zur Ermittlung der Sequenz der Aminosäureeinheiten. Ein derartiges Verfahren ist in allen Einzelheiten in der DE-PS 31 37 875 beschrieben, auf die Bezug genommen wird. Hierbei wird eine Probe eines chemischen Materials auf das Filterelement 14 aufgetragen, das für eine Vielzahl von Fluiden durchlässig ist, wodurch es zu einer Wechselwirkung der Probe mit den Fluiden kommt. Das poröse Filterelement 14 ist in die Reaktionskammer 15 eingebettet und in seinen Abmessungen genau den Kammermaßen angepaßt. Insbesondere wird mit der Reaktionskammer 15 der stufenweise Abbau von Peptid- und Proteinketten in einem automatischen Gerät zur Ermittlung der Sequenz der Aminosäureeinheiten durchgeführt. Dabei wird das Filterelement 14 der Länge nach umflossen, wodurch das ungewollte Auswaschen der Probe deutlich verringert wird. Das Protein bleibt auf dem Filterelement 14 haften. Die Zeit für das sonst notwendige Waschen des Filters bei Verwendung einer Matrix aus unter dem Handelsnamen bekannten Polybren wird eingespart. Ferner sind die Analysen der einzelnen Abbauschritte ohne Verwendung einer Matrix wesentlich sauberer. Das Filterelement 14 kann eine beliebige Form haben. Die Leitungsanschlüsse an den Ein- und Auslässen brauchen beim Auftragen einer neuen Probe nicht gelöst zu werden. Durch häufiges Auf- und Zuschrauben könnten ansonsten leicht Undichtigkeiten entstehen. Der Metallblock der Halterung 27 aus Aluminium dient gleichzeitig der Temperierung des Reaktionsraumes, d.h. der Reaktionskammer 15. Dadurch wird der Reaktor sehr kompakt, es wird insbesondere keine Umluftheizung benötigt. Der Reaktionsraum 15 kann sehr klein ausgebildet werden, was insbesondere für sehr kleine Probenmengen wichtig ist. Damit kann mit wenig Lösungsmittel der gesamte Reaktionsraum 15 gewaschen werden, wodurch das Auswaschen der Probe ebenfalls verringert wird.

## Patentansprüche

1. Gerät zur Durchführung von chemischen Prozessen an einer Probe eines chemischen Materials mit einer zwischen zwei Kammerelementen (11,12) ausgebildeten Reaktionskammer (15), mit in diese auf einander gegenüberliegenden Seiten mündenden Ein- und Auslässen (16,17), und mit einem in der Reaktionskammer angeordneten Filterelement (14), wobei die Reaktionskammer (15) des Gerätes (10) in der Trennebene der beiden Kammerelemente (11,12) als flache Ausnehmung ausgebildet ist, deren Tiefe geringfügig größer als die Dicke des in die Reaktionskammer (15) eingelegten und diese teilweise ausfüllenden Filterelementes (14) ist,und daß die kanalartigen Ein- und Auslässe (16,17) in den Boden der Reaktionskammer (15) derart münden, daß diese durchströmt wird, dadurch gekennzeichnet, daß der kanalartige Einlaß (16) als Vorkammer mit definiertem Volumen zur volumetrischen Dosierung von flüssigen Reagenzien und Lösungsmitteln, mit Ein- und Auslässen (18, 21) zu ihrer Füllung in den Einlaßkanal (16) ausgebildet ist, und daß das Probematerial derart in der Reaktionskammer (15) angeordnet ist, daß es der Länge nach umflossen wird.

2. Gerät nach Anspruch 1, dadurch gekennzeichnet, daß der Einlaß (16) mit zwei Leitungen (18,21) versehen ist, wobei in jeder Leitung (18;21) ein Steuerventil angeortdnet ist.

3. Gerät nach Anspruch 1, dadurch gekennzeichnet, daß der Einlaß (16) mit drei Leitungen (18,20,21) versehen ist, von denen die Leitung (21) als Überlauf ausgebildet ist.

4. Gerät nach Anspruch 1, dadurch gekennzeichnet, daß der Einlaß (16) mit einer Leitung (20) als Einlaß und mit einer Leitung (21) als Auslaß versehen ist.

5. Gerät nach einem der Ansprüche 1 bis 4, dadurch gekennzeichnet, daß die flache Ausnehmung der Reaktionskammer (15) in die Oberfläche des einen Kammerelementes (11) eingebracht ist, daß die Ein- und Auslässe (16,17) durch Bohrungen in die Tiefe des Kammerelementes (11) ausgebildet sind und daß die Reaktionskammer (15) und das Filterelement (14) von einer erhaben ausgebildeten, flächenmäßig geringfügig größeren Oberfläche des anderen Kammerelementes (12) abgeschlossen sind.

6. Gerät nach einem der Ansprüche 1 bis 5, dadurch gekennzeichnet, daß die Reaktionskammer (15) durch Zwischenlage einer Dichtmembran (3) aus Polytetrafluorethylen (PTFE) oder anderem geeigneten, inertem Material in der Trennebene der beiden Kammerelemente (11,12) abgedichtet oder durch eine ausgestanzte Membran vergrößerbar ist.

7. Gerät nach einem der Ansprüche 1 bis 6, dadurch gekennzeichnet, daß die Ein- und Auslässe (16,17) der Reaktionskammer (15) mit aus dem Kammerelement (11) rechtwinklig herausgeführten L-förmigen Bohrungen (16′, 18′;17′,19′) mit Anschlußschläuchen verbunden sind, wobei die als Vorkammer ausgebildete Bohrung (16′) durch Bohrungen (20′,21′) mit Schläuchen verbunden ist.

8. Gerät nach einem der Ansprüche 1 bis 7, dadurch gekennzeichnet, daß die zusammengebauten Kammerelemente (11, 12) in einer Halterung (27) eingesetzt sind, die am Boden eine Beleuchtungseinrichtung (28) und eine Heizeinrichtung enthält.

9. Gerät nach einem der Ansprüche 1 bis 8, dadurch gekennzeichnet, daß die Vorkammer ein Reagenz mit einem definierten Volumen enthält, das in die Reaktionskammer (15) geleitet wird.

10. Gerät nach einem der Ansprüche 1 bis 9, dadurch gekennzeichnet, daß mehrere Reaktionskammern parallel oder in Reihe verbunden sind, wobei alle Lösungen in flüssiger Phase dosierbar sind.

11. Gerät nach einem der Ansprüche 1 bis 10, dadurch gekennzeichnet, daß die Leitungen (18,19,20,21) als Kapillare ausgebildet sind.

12. Gerät nach einem der Ansprüche 1 bis 11, dadurch gekennzeichnet, daß der Durchmesser der Bohrung (16′) des Einlasses (16) gegenüber den als Kapillare ausgebildeten Leitungen (18,19,20,31) größer ist.

13. Gerät nach einem der Ansprüche 1 bis 12, dadurch gekennzeichnet, daß die Reaktionskammer (15) die Form eines Rechteckes, eines Dreiecks, Kreisform oder eine andere geometrische Form aufweist.

14. Gerät nach einem der Ansprüche 1 bis 13, dadurch gekennzeichnet, daß die Ein- und Auslässe (16,17) an den Enden der Reaktionskammer (15) ihrer räumlich längsten Ausdehnung derart angeordnet sind, daß die Fluide die Reaktionskammer (15) der Länge nach durchströmen.

15. Gerät nach einem der Ansprüche 1 bis 14, dadurch gekennzeichnet, daß bei einer kreisförmig ausgebildeten Reaktionskammer (15) die Ein- und Auslässe (16,17) in den Schnittpunkten eines Durchmessers mit der kreisförmigen Peripherie der Reaktionskammer (15) liegen.

16. Gerät nach einem der Ansprüche 1 bis 14, dadurch gekennzeichnet, daß bei einer dreieckförmig ausgebildeten Reaktionskammer (15) der Einlaß (16) in einer der drei Dreiecksseiten und der Auslaß (17) in der der Dreiecksseite gegenüberliegenden Dreiecksspitze liegt.

17. Gerät nach Anspruch 16, dadurch gekennzeichnet, daß die dreieckförmige Reaktionskammer (15) um ihren Mittelpunkt drehbar in einer Halterung angeordnet ist.

18. Gerät nach Anspruch 15 und 16, dadurch gekennzeichnet, daß das dreieckförmig ausgebildete Filterelement (14) in der Halterung drehbar gelagert ist.

## Claims

1. Apparatus for carrying out chemical processes on a sample of a chemical material having a reaction chamber (15) constructed between two chamber elements (11,12), with inlets and outlets (16,17) opening out on oppositely located sides and having a filter element (14) disposed in the reaction chamber, in which the reaction chamber (15) of the apparatus (10), in the junction plane of the two chamber elements (11,12) is constructed in the form of a shallow recess, whose depth is slightly greater than the thickness of the filter element (14) inserted into the reaction chamber (15) and is partly filling the same, and in that the duct-like inlets and outlets (16,17) lead into the bottom of the reaction chamber (15) in such a way that the same is circulated through,
characterized in that
the duct-like inlet (16), in the form of an antechamber having a defined volume for the volumetric dosing of liquid reagents and solvents, with inlets and outlets (18,21) for their filling is constructed in the inlet duct (15) in such a way that it is lengthways circumcirculated.

2. Apparatus according to Claim 1,
characterized in that
the inlet (16) is provided with two ducts (18,21), in which case a control valve is disposed in each duct (18;21).

3. Device according to Claim 1,
characterized in that
the inlet (16) is provided with three ducts (18,20,21), of which the duct (21) is constructed in the form of an overflow.

4. Apparatus according to Claim 1,
characterized in that
the inlet (16) is provided with a duct (20) in the form of an inlet and with a duct (21) having the form of an outlet.

5. Apparatus according to any of Claims 1 to 4,
characterized in that
the shallow recess of the reaction chamber (15) is incorporated into the surface of one of the chamber elements (11), in that the inlets and outlets (16,17) are formed by drilled holes in the depth of the chamber element (11) and in that the reaction chamber (15) and the filter element (14) are sealed off by a raisedly constructed, areawise slightly larger surface of the other chamber element (12).

6. Apparatus according to any of Claims 1 to 5,
characterized in that
the reaction chamber (15) is sealed by the interposition of a sealing diaphragm (3) of polytetrafluoroethylene (PTFE) or some other suitable, inert material in the junction plane of the two chamber elements (11,12) or can be enlarged by a stamped-out diaphragm.

7. Apparatus according to any of Claims 1 to 6,
characterized in that
the inlets and outlets (16,17) of the reaction chamber (15) communicate with L-shaped bores (16′, 18′; 17′, 19′) led out at right angles from the chamber element (11) with connection hoses, while the bore (16′) constructed in the form of an antechamber communicates via bores (20′, 21′) with hoses.

8. Apparatus according to any of Claims 1 to 7,
characterized in that
the assembled chamber elements (11,12) are inserted into a mounting means (27) which, at the bottom, comprises a lighting means (28) and a heating means.

9. Apparatus according to any of Claims 1 to 8,
characterized in that
the antechamber contains a reagent possessing a defined volume which is conducted into the reaction chamber (15).

10. Apparatus according to any of Claims 1 to 9,
characterized in that
several reaction chambers communicate parallelly or in series, while it is possible to dose all solutions in the liquid phase.

11. Apparatus according to any of Claims 1 to 10,
characterized in that
the ducts (18,19,20,21) are constructed in the form of capillary tubes.

12. Apparatus according to any of Claims 1 to 11,
characterized in that
the diameter of the bore (16′) of the inlet is larger in comparison with that of the ducts constructed in the form of capillary tubes (18,19,20,21).

13. Apparatus according to any of Claims 1 to 12,
characterized in that
the reaction chamber (15) possesses the configuration of a rectangle, a triangle, a circle or some other geometric configuration.

14. Apparatus according to any of Claims 1 to 13,
characterized in that
the inlets and outlets (16,17), at the ends of the reaction chamber (15) of their spatially longest expansion, are disposed in such a way that the fluids flow lengthways through the reaction chamber (15).

15. Apparatus according to any of Claims 1 to 14,
characterized in that,
in a circularly constructed reaction chamber (15), the inlets and outlets (16,17) are located in the points of intersection of a diameter with the circular periphery of the reaction chamber (15).

16. Apparatus according to any of Claims 1 to 14,
characterized in that,
in a triangularly constructed reaction chamber (15), the inlet (16) Lies in one of the three triangle sides and the outlet lies in the triangle point located opposite to the triangle side.

17. Apparatus according to Claim 16,
characterized in that
the triangular reaction chamber (15) is disposed in a mounting means so as to be rotatable about its centre.

18. Device according to Claims 15 and 16,
characterized in that
the triangularly constructed filter element (14) is rotatably supported in the mounting means.

## Revendications

1. Appareil pour l'exécution de processus chimiques sur un échantillon de matériau chimique avec une chambre de réaction (15) configurée entre deux éléments de chambre (11, 12), avec des entrées et sorties (16, 17) qui aboutissent dans la chambre à réaction sur des côtés opposés l'un à l'autre et avec un élément de filtre (14) placé dans la chambre de réaction, la chambre de réaction (15) de l'appareil (10) étant configurée dans le plan de séparation des deux éléments de chambre (11, 12) comme évidement plat dont la profondeur est légèrement supérieure à l'épaisseur de l'élément de filtre (14) mis en place dans la chambre de réaction (15) et la remplissant partiellement, les entrées et sorties du type canal (16, 17) aboutissant dans le fond de la chambre de réaction (15) de telle manière que celle-ci est baignée, **caractérisé en ce** que l'entrée de type canal (16) en tant que préchambre avec un volume défini pour le dosage volumétrique de réactifs et de solvants liquides est configurée dans le canal d'entrée (16) avec des entrées et des sorties (18, 21) pour leur remplissage et que le matériau de l'échantillon est placé dans la chambre de réaction (15) de telle manière qu'il est baigné en longueur.

2. Appareil selon la revendication 1, **caractérisé en ce** que l'entrée (16) est pourvue de deux conduites (18, 21), une vanne-pilote étant placée dans chaque conduite (18 21).

3. Appareil selon la revendication 1, **caractérisé en ce que** l'entrée (16) est pourvue de trois conduites (18, 20, 21) parmi lesquelles la conduite (21) est configurée comme trop-plein.

4. Appareil selon la revendication 1, **caractérisé en ce** que l'entrée (16) est pourvue d'une conduite (20) comme entrée et d'une conduite (21) comme sortie.

5. Appareil selon l'une des revendications 1 à 4, **caractérisé en ce** que l'évidement plat de la chambre de réaction (15) est ménagé dans la surface de l'un des éléments de chambre (11), que les entrées et sorties (16, 17) sont configurées par des forures dans la profondeur de l'élément de chambre (11) et que la chambre de réaction (15) et l'élément de filtre (14) sont terminés par une surface de l'autre élément de chambre (12) qui est légèrement plus grande en superficie et qui est configurée en étant en relief.

6. Appareil selon l'une des revendications 1 à 5, **caractérisé en ce** que la chambre de réaction (15) est étanchée par l'intercalation d'une membrane d'étanchéité (3) en polytétrafluoréthylène ou en autre matériau inerte approprié dans le plan de séparation des deux éléments de chambre (11, 12) ou qu'elle peut être agrandie par une membrane découpée

7. Appareil selon l'une des revendications 1 à 6, **caractérisé en ce** que les entrées et sorties (16, 17) de la chambre de réaction (15) sont reliées à des forures en forme de L (16′, 18′; 17′, 19′) qui sortent à angle droit de l'élément de chambre (11) avec des tuyaux de raccord, la forure (16′) configurée comme préchambre étant reliée par des forures (20′, 21′) à des tuyaux.

8. Appareil selon l'une des revendications 1 à 7, **caractérisé en ce** que les éléments de chambre (11, 12) assemblés sont mis en place dans un support (27) qui contient dans le fond un dispositif d'éclairage (28) et un dispositif de chauffage.

9. Appareil selon l'une des revendications 1 à 8, **caractérisé en ce** que la préchambre contient un agent réactif avec un volume défini qui est amené dans la chambre de réaction (15).

10. Appareil selon l'une des revendications 1 à 9, **caractérisé en ce** que plusieurs chambres de réaction sont reliées en parallèle ou en série, toutes les solutions pouvant être dosables en phase liquide.

11. Appareil selon l'une des revendications 1 à 10, **caractérisé en ce** que les conduites (18, 19, 20, 21) sont configurées comme des tubes capillaires.

12. Appareil selon l'une des revendications 1 à 11, **caractérisé en ce** que le diamètre de la forure (16′) de l'entrée (16) est plus grand que celui des conduites (18, 19, 20, 21) configurées comme tubes capillaires.

13. Appareil selon l'une des revendications 1 à 12, **caractérisé en ce** que la chambre de réaction (15) présente la forme d'un rectangle, d'un triangle, d'un cercle ou une autre forme géométrique.

14. Appareil selon l'une des revendications 1 à 13, **caractérisé en ce** que les entrées et sorties (16, 17) sont placées aux extrémités de la chambre de réaction (15) dans sa plus longue extension dans l'espace de telle manière que les fluides traversent la chambre de réaction (15) en longueur.

15. Appareil selon l'une des revendications 1 à 14, **caractérisé en ce** que pour une chambre de réaction (15) configurée en forme de cercle les entrées et sorties (16, 17) se trouvent aux points d'intersection d'un diamètre avec la périphérie en forme de cercle de la chambre de réaction (15).

16. Appareil selon l'une des revendications 1 à 14, **caractérisé en ce** que pour une chambre de réaction (15) configurée en forme de triangle l'entrée (16) se situe dans l'un des trois côtés du triangle et la sortie (17) dans la pointe du triangle qui est opposée au côté du triangle.

17. Appareil selon la revendication 16, **caractérisé en ce** que la chambre de réaction en forme de triangle (15) est placée en étant rotative autour de son point central dans un support.

18. Appareil selon les revendications 15 et 16, **caractérisé en ce** que l'élément de filtre (14) configuré en forme de triangle est positionné en étant rotatif dans le support.
